# EUROPEAN PATENT APPLICATION

(11) **EP 4 472 286 A1**
(43) Date of publication of application: **04.12.2024**
(21) Application number: 22931900.9
(22) Date of filing: 29.12.2022
(51) Int. Cl.: H04W 36/30, H04W 76/18, H04W 84/00

(54) **ABNORMAL EVENT PROCESSING METHOD AND APPARATUS**

(30) Priority: 18.03.2022 CN 202210273027
(71) Applicant: Huawei Technologies Co., Ltd., Shenzhen, Guangdong 518129 (CN)
(72) Inventor: WANG, Man, Shenzhen, Guangdong 518129 (CN); ZHANG, Jian, Shenzhen, Guangdong 518129 (CN); WENG, Zaixin, Shenzhen, Guangdong 518129 (CN)
(74) Representative: Goddar, Heinz J.
(86) International application number: PCT/CN2022/143235
(87) International publication number: WO 2023/173895

(57) **Abstract**

Embodiments of this application provide an anomaly event handling method and apparatus, applied to the field of fault management oriented to industry users. The method includes: A network management entity obtains anomaly information of a terminal device, alarm information of a network device, and topology information of the terminal device and the network device; then the network management entity determines, based on the topology information of the terminal device and the network device, that the anomaly information of the terminal device and the alarm information of the network device are related to a same anomaly event; and finally, the network management entity handles the anomaly event. Further, the network management entity may determine that anomaly information of a terminal device and alarm information of an access network device in a same network topology are related to a same anomaly event, to subsequently handle the anomaly event. Therefore, in this solution, while a periodicity of handling the anomaly event is shortened and efficiency of handling the anomaly event by the network management entity is improved, signaling sending may be further reduced, and network resources may be saved.

## Description

This application claims priority to Chinese Patent Application No. 202210273027.2, filed with the China National Intellectual Property Administration on March 18, 2022 and entitled "ANOMALYEVENT HANDLING METHOD AND APPARATUS", which is incorporated herein by reference in its entirety.

### TECHNICAL FIELD

Embodiments of this application relate to the communication field, and in particular, to an anomaly event handling method and apparatus.

### BACKGROUND

A current communication system (for example, a 5th generation (5th generation, 5G) mobile communication system) is applied to a conventional terminal user, and is also applied to some industry users, for example, industry users such as an internet of vehicles, a smart campus, smart healthcare, and smart transportation.

Because the foregoing industry users also have high requirements on network reliability and service experience, and have low tolerance for service experience deterioration, in fault management oriented to the industry users, a requirement on efficiency of handling an anomaly event is also high. However, currently, the efficiency of handling the anomaly event still needs to be improved, and a large quantity of resources are consumed in a communication process, resulting in poor user experience.

### SUMMARY

Embodiments of this application provide an anomaly event handling method. According to the method, it can be determined that anomaly information of a terminal device and alarm information of an access network device in a same network topology or on a same link are related to a same anomaly event, so that the same anomaly event is subsequently handled. Further, while a periodicity of handling the anomaly event is shortened and efficiency of handling the anomaly event by a network management entity is improved, signaling sending is reduced, and network resources are saved.

According to a first aspect, an anomaly event handling method is provided, including: A network management entity obtains anomaly information of a terminal device, alarm information of a network device, and topology information of the terminal device and the network device. The network management entity determines, based on the topology information of the terminal device and the network device, that the anomaly information of the terminal device and the alarm information of the network device are related to a same anomaly event, where the anomaly event is that a communication link between the terminal device and the network device is anomalous. The network management entity handles the anomaly event.

Specifically, the network management entity may receive the anomaly information related to the terminal device from an agent (UE agent) module or a server (for example, a customer premises equipment, where one customer premises equipment may manage several terminal devices) of the terminal device, and receive the alarm information from the network device, and the topology information of the terminal device and the network device. The agent (UE agent) module of the terminal device is configured to collect performance, an anomaly, an alarm, and/or experience of the terminal device, and other data. The agent module of the terminal device may be a built-in or external application (Application, APP) of the terminal device, or a management module of the terminal device, or a server related to the terminal device. If the terminal device is directly connected to the network device, the agent module of the terminal device is located inside the terminal device. If the terminal device is connected to the network device through the customer premises equipment, the agent module of the terminal device is located in the customer premises equipment. In addition, the network management entity may receive the alarm information of the network device from an access network device and/or a core network device, and receive the topology information of the terminal device and the network device from the access network device.

The topology information of the terminal device and the network device may indicate link information of the terminal device and the network device. For example, it means that there is a radio resource control (Radio resource control, RRC) connection between the terminal device and the network device, and the terminal device communicates with the network device in the foregoing network topology or on the foregoing link.

For example, the network management entity may determine, based on the obtained anomaly information of the terminal device, the obtained alarm information of the network device, and the obtained topology information of the terminal device and the network device, that an anomaly of the terminal device and an alarm of the network device are a same anomaly event, and no longer separately determine a plurality of anomaly events for each piece of anomaly information detected by the terminal device or each piece of alarm information of the network device.

Based on the foregoing solution, the network management entity does not separately determine an anomaly event based on a single piece of anomaly information of the terminal device or a single piece of alarm information of the network device, and does not separately perform dispatch handling. Instead, the network management entity determines that the anomaly information of the terminal device and the alarm information of the network device in a same network topology (or on a same link) are related to the same anomaly event, so that the same anomaly event is subsequently handled (for example, one piece of anomaly handling information is generated). Further, in this solution, while a periodicity of handling the anomaly event is shortened and efficiency of handling the anomaly event by the network management entity is improved, signaling sending may be further reduced, and network resources are saved.

With reference to the first aspect, in some implementations of the first aspect, that the network management entity handles the anomaly event includes: The network management entity determines, based on a transmission status, of a data packet that includes a flag field and that is configured by the network management entity, between the terminal device and the network device, that the anomaly event is that the terminal device and the network device are anomalous or the terminal device is anomalous. The network management entity generates anomaly handling information based on the anomaly event that the terminal device and the network device are anomalous or the terminal device is anomalous, where the anomaly handling information is used to handle the anomaly event.

The transmission status of the data packet including the flag field between the network device and the terminal device may include two cases: normal transmission or abnormal transmission of the data packet including the flag field between the network device and the terminal device. The anomaly handling information is used to perform a dispatch operation and handle the anomaly event. For example, the network management entity may send the anomaly handling information to a management person or an upper-layer management device, to complete the dispatch operation and handle the anomaly event.

Based on the foregoing solution, in this solution, it may be determined, based on the anomaly information of the terminal device, the alarm information of the network device, and the transmission status, of the data packet that includes the flag field and that is configured by the network management entity, between the terminal device and the network device, that the anomaly event is that the terminal device and the network device are anomalous, or that the anomaly event is that the terminal device is anomalous. This avoids a phenomenon that a network side is affected and continuously sends alarm information because the terminal device and the network device are anomalous or the terminal device is anomalous, but an anomaly event cannot be accurately determined based on only the alarm information of the network side.

In addition, in this solution, the network management entity may further generate the anomaly handling information, and perform dispatch handling on the anomaly event to handle the anomaly event. Further, in comparison with a manner of separately determining the anomaly event based on the single piece of anomaly information of the terminal device or the single piece of alarm information of the network device and performing dispatch handling, this solution can improve dispatch handling efficiency, reduce signaling sending, and save network resources.

With reference to the first aspect, in some implementations of the first aspect, that the network management entity determines, based on a transmission status, of a data packet that includes a flag field and that is configured by the network management entity, between the terminal device and the network device, that the anomaly event is that the terminal device and the network device are anomalous or the terminal device is anomalous includes: The network management entity sends information about the data packet including the flag field. After the network management entity sends the information about the data packet including the flag field, the network management entity receives information about the transmission status that is of the data packet including the flag field between the terminal device and the network device and that is detected by the network device. The network management entity determines, based on the anomaly information of the terminal device, the alarm information of the network device, and the information about the transmission status of the data packet including the flag field between the terminal device and the network device, that the anomaly event is that the terminal device and the network device are anomalous or the terminal device is anomalous. In a possible implementation, if the transmission status of the data packet including the flag field between the network device and the terminal device is normal transmission, the network management entity may determine, based on the anomaly information of the terminal device, the alarm information of the network device, and the transmission status, of the data packet that includes the flag field and that is configured by the network management entity, between the terminal device and the network device, that the anomaly event is that the terminal device is anomalous.

Based on the foregoing solution, the network management entity may determine, based on the anomaly information of the terminal device, the alarm information of the network device, and the transmission status of the data packet including the flag field between the network device and the terminal device being the normal transmission, that the anomaly event is that the terminal device is anomalous. Further, this can avoid a phenomenon that the network side is affected and continuously sends the alarm information because the terminal device is anomalous, but the anomaly event cannot be accurately determined based on only the alarm information of the network side.

In another possible implementation, if the transmission status of the data packet including the flag field between the network device and the terminal device is abnormal transmission, the network management entity may determine, based on the anomaly information of the terminal device, the alarm information of the network device, and the transmission status, of the data packet that includes the flag field and that is configured by the network management entity, between the terminal device and the network device, that the anomaly event is that the terminal device and the network device are anomalous (for example, an air interface between the terminal device and the network device is anomalous).

Based on the foregoing solution, the network management entity may determine, based on the anomaly information of the terminal device, the alarm information of the network device, and the transmission status of the data packet including the flag field between the network device and the terminal device being the abnormal transmission, that the anomaly event is that the terminal device and the network device are anomalous. Further, this can avoid a phenomenon that the network side is affected and continuously sends the alarm information because the terminal device and the network device are anomalous, but the anomaly event cannot be accurately determined based on only the alarm information of the network side.

In an implementation, the data packet including the flag field may be a packet data convergence protocol (Packet data convergence protocol, PDCP) data packet with a flag field. Between the terminal device and the network device, a packet loss status, an out-of-order transmission status, and a quantity of repeated transmission times of communication between the terminal device and the network device are recorded in a PDCP status report (PDCP status report, PDCP SR) in an existing protocol. However, the PDCP status report is included in the PDCP data packet, and the network management entity cannot directly read content of the PDCP data packet. Therefore, the network device and the terminal device need to negotiate specific PDCP data packets whose status reports are to be collected statistics on, and the network device collects statistics on and reports the status reports to the network management entity.

With reference to the first aspect, in some implementations of the first aspect, that a network management entity obtains topology information of the terminal device and the network device includes: The network management entity sends topology request information, where the topology request information is used to request to report the topology information of the terminal device and the network device. The network management entity receives the topology information of the terminal device and the network device after the network management entity sends the topology request information.

With reference to the first aspect, in some implementations of the first aspect, the topology request information is used to indicate to periodically report the topology information of the terminal device and the network device, and/or to report the topology information of the terminal device and the network device in a manner of meeting a preset condition for reporting the topology information of the terminal device and the network device.

With reference to the first aspect, in some implementations of the first aspect, the anomaly information of the terminal device and the alarm information of the network device are received by the network management entity within preset time.

The preset time may be an empirical value obtained through statistics collection based on alarm information in a communication network. For example, after a fault alarm occurs on the network device, an alarm of the core network device may also be caused. After statistics on a difference between alarm time of the network device and alarm time of the core network device is collected, the empirical value of the preset time may be determined by considering a difference for alarm time of each node on a same link. For example, the empirical value is usually less than 2 minutes. In this case, the preset time may be set to 2 minutes. In other words, the network management entity may determine one anomaly event based on that the anomaly information of the terminal device and the alarm information of the network device in the same network topology or on the same link are received within the 2 minutes.

In addition, the preset time may alternatively be an analysis value obtained by analyzing historical information and future prediction information in the communication network through artificial intelligence. The analysis value is optimal preset time obtained by analyzing historical data and prediction data.

With reference to the first aspect, in some implementations of the first aspect, the anomaly information of the terminal device indicates at least one of the following anomalies of the terminal device: poor service quality, poor network connection quality, a screen display anomaly, freezing, a cell change, a spectrum change, an internet protocol address change, a network type change, or a network anomaly.

For example, the network anomaly may include at least one of the following: a wireless registration failure, a protocol data unit (Protocol Data Unit, PDU) session establishment failure, a massive antenna (Massive Multiple In Multiple Out, Massive MIMO or MM) beam access selection failure, a radio resource control (Radio resource control, RRC) reconnection anomaly, an RRC random access anomaly, an RRC reconfiguration anomaly, an RRC reestablishment anomaly, transmission network congestion, one-way audio (for example, during a call, a voice of a peer party cannot be heard and only their own voice can be heard), high transmission control protocol (Transmission control protocol, TCP) retransmission, or frequent RRC reestablishment.

With reference to the first aspect, in some implementations of the first aspect, that a network management entity obtains anomaly information of a terminal device includes: The network management entity sends anomaly request information, where the anomaly request information is used to request to report the anomaly information of the terminal device. The network management entity receives the anomaly information of the terminal device after the network management entity sends the anomaly request information.

For example, the network management entity may send the anomaly request information to the terminal device through the core network device, or may send the anomaly request information to the terminal device through the access network device. An interface between the network management entity and the network device or an interface between the network management entity and the core network device may be an existing interface, or may be a new interface.

With reference to the first aspect, in some implementations of the first aspect, the anomaly request information is used to indicate to periodically report the anomaly information of the terminal device, and/or to report the anomaly information of the terminal device in a manner of meeting a preset condition for reporting the anomaly information of the terminal device.

With reference to the first aspect, in some implementations of the first aspect, the anomaly information of the terminal device includes information about the terminal device, service type information, application type information, and/or occurrence time information of the anomaly event, and the anomaly information of the terminal device further includes at least one of the following information: an identifier of the anomaly information of the terminal device, a type of the anomaly event, change time of the anomaly event, clearance time of the anomaly event, or a preset threshold of the anomaly event.

With reference to the first aspect, in some implementations of the first aspect, the network device determines, based on the topology information of the terminal device and the network device, that the terminal device and the network device are on a same communication link.

With reference to the first aspect, in some implementations of the first aspect, the network management entity receives intent input information, where the intent input information includes at least one of the following information: a to-be-handled event, an indication for reporting a quantity of handled events, and a time limit for handling the anomaly event, where the anomaly event is the to-be-handled event or the handled event.

The intent input information represents an obj ective or an expectation of anomaly event handling proposed by an intent consumer to the network management entity, so that the event management entity meets the objective or the expectation proposed by the intent consumer as much as possible in a process of handling the anomaly event.

For example, the to-be-handled event included in the intent input information may include an anomaly event in three types: the anomaly event, an event of performance deterioration of the network device or performance deterioration of the terminal device, or a risk event (for example, an event that the intent consumer predicts a risk based on an empirical value but does not occur yet). The network management entity may handle the anomaly event based on the intent input information, and does not handle the event of performance deterioration of the network device or performance deterioration of the terminal device, or the risk event.

For example, for the time limit for handling the anomaly event included in the intent input information, the network management entity needs to meet the time limit for handling the anomaly event proposed by the intent consumer as much as possible. If handling of the anomaly event is not completed within the time limit, the network management entity may check or optimize a procedure of handling the anomaly event, and feed back actual time for handling the anomaly event to the intent consumer. With reference to the first aspect, in some implementations of the first aspect, the network management entity sends intent output information, where the intent output information includes at least one of the following information: a change of time for handling the anomaly event, a quantity of handled events, or the handled event.

The intent output information represents a status of handling the anomaly event by the network management entity, and is a feedback of an intent or the expectation proposed by the intent consumer.

For example, after completing handling of the anomaly event in the first aspect, the network management entity may feed back, to the intent consumer, that handling of the anomaly event is completed.

With reference to the first aspect, in some implementations of the first aspect, the network device includes an access network device and a core network device, or the access network device.

According to a second aspect, an anomaly event handling method is provided, including: A terminal device receives anomaly request information, where the anomaly request information is used to request to report anomaly information of the terminal device. The terminal device generates the anomaly information of the terminal device based on the anomaly request information. The terminal device sends the anomaly information of the terminal device.

With reference to the second aspect, in some implementations of the second aspect, the anomaly information of the terminal device indicates that at least one of the following anomalies occurs on the terminal device: poor service quality, poor network connection quality, a screen display anomaly, freezing, a cell change, a spectrum change, an internet protocol address change, a network type change, or a network anomaly.

With reference to the second aspect, in some implementations of the second aspect, the anomaly information of the terminal device includes information about the terminal device, service type information, application type information, and/or occurrence time information of the anomaly event, and the anomaly information of the terminal device further includes at least one of the following information: an identifier of the anomaly information of the terminal device, a type of the anomaly event, change time of the anomaly event, clearance time of the anomaly event, or a preset threshold of the anomaly event.

With reference to the second aspect, in some implementations of the second aspect, the anomaly request information is used to request to report the anomaly information of the terminal device.

With reference to the second aspect, in some implementations of the second aspect, the anomaly request information is used to indicate to periodically report the anomaly information of the terminal device, and/or to report the anomaly information of the terminal device in a manner of meeting a preset condition for reporting the anomaly information of the terminal device.

According to a third aspect, an anomaly event handling method is provided, including: A network management entity obtains alarm information of a network device and topology information of the network device. The network management entity determines, based on the topology information of the network device, that the alarm information of the network device is related to an anomaly event, where the anomaly event is that a communication link of the network device is anomalous. The network management entity handles the anomaly event.

For example, the network device is mainly an access network device, and the access network device may include a control unit (Control unit, CU) and a user unit (Data unit, DU). The control unit and the user unit may separately generate alarm information. A separate control unit and user unit continuously generate a same type of alarm information. The network management entity may receive continuous alarm information from a control unit and a user unit in a same network topology, and determine one anomaly event.

The same network topology means that the user unit is connected to the control unit, and the control unit is managed by the network management entity. Content of the alarm information generated by the control unit and the user unit may be the same as content of alarm information of a network device in a conventional technology.

Based on the foregoing solution, the network management entity determines, based on the topology information of the network device, that the continuous alarm information of the network device in the same network topology or on a same link is related to a same anomaly event, and subsequently performs dispatch handling on the anomaly event. Further, in this solution, while a periodicity of handling the anomaly event is shortened and efficiency of handling the anomaly event by the network management entity is improved, signaling sending may be further reduced, and network resources are saved.

With reference to the third aspect, in some implementations of the third aspect, the network management entity determines, based on the alarm information of the network device and the topology information of the network device, that the anomaly event is that the network device is anomalous.

The network management entity handles the anomaly event based on the anomaly event that the network device is anomalous.

Specifically, the network management entity may determine that the anomaly event is that the network device is anomalous. For example, if the network device includes the control unit and the user unit, and all user units connected to the control unit send alarm information, the network management entity may determine that the anomaly event is that the control unit is anomalous. If another user unit connected to the control unit does not send alarm information, the network management entity may determine that the anomaly event is that the user unit included in the network device is anomalous.

Finally, the network management entity may provide root cause analysis and an optimization suggestion based on the alarm information and the anomaly event that the user unit included in the network device is anomalous, and handle the anomaly event. For example, if a root cause is that a base station generates an alarm such as an increase in a terminal device handover request, an increase in a neighboring cell random access quantity, or an increase in an average downlink latency, and the network management entity may perform root cause analysis to find that the alarm is caused by a fault of a DU in the base station, the network management entity may recommend replacing the DU.

With reference to the third aspect, in some implementations of the third aspect, that a network management entity obtains topology information of the network device includes: The network management entity sends topology request information, where the topology request information is used to request to report the topology information of the network device. The network management entity receives the topology information of the network device after the network management entity sends the topology request information.

With reference to the third aspect, in some implementations of the third aspect, the topology request information is used to indicate to periodically report the topology information of the network device, and/or to report the topology information of the network device in a manner of meeting a preset condition for reporting the topology information of the network device.

With reference to the third aspect, in some implementations of the third aspect, the alarm information of the network device is received by the network management entity within preset time.

With reference to the third aspect, in some implementations of the third aspect, that a network management entity obtains alarm information of a network device includes: The network management entity sends alarm request information, where the alarm request information is used to request to report the alarm information of the network device.

The network management entity receives the alarm information of the network device after the network management entity sends the alarm request information.

With reference to the third aspect, in some implementations of the third aspect, the alarm request information is used to indicate to periodically report the alarm information of the network device, and/or to report the alarm information of the network device in a manner of meeting a preset condition for reporting the alarm information of the network device.

With reference to the third aspect, in some implementations of the third aspect, the network management entity receives intent input information, where the intent input information includes at least one of the following information: a to-be-handled event, an indication for reporting a quantity of handled events, and a time limit for handling the alarm event, where the alarm event is the to-be-handled event or the handled event.

With reference to the third aspect, in some implementations of the third aspect, the network management entity sends intent output information, where the intent output information includes at least one of the following information: a change of time for handling the alarm event, a quantity of handled events, or the handled event.

According to a fourth aspect, an anomaly event handling apparatus is provided. The apparatus is configured to perform the method provided in the first aspect, the second aspect, or the third aspect. Specifically, the apparatus may include a unit and/or a module configured to perform the method provided in the first aspect, the second aspect, or the third aspect, for example, a processing unit and/or a communication unit.

In an implementation, the apparatus is a network management entity. When the apparatus is the network management entity, the communication unit may be a transceiver or an input/output interface, and the processing unit may be a processor.

In another implementation, the apparatus is a chip, a chip system, or a circuit used in a network management entity. When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

For example, the apparatus is the chip, the chip system, or the circuit in the network management entity. In this case, the apparatus may include the unit and/or the module configured to perform the method provided in the first aspect or the third aspect, for example, the processing unit and/or the communication unit.

In an implementation, the apparatus is a terminal device. When the apparatus is the terminal device, the communication unit may be a transceiver or an input/output interface, and the processing unit may be a processor.

In another implementation, the apparatus is a chip, a chip system, or a circuit used in a terminal device. When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

For example, the apparatus is the chip, the chip system, or the circuit in the terminal device. In this case, the apparatus may include the unit and/or the module configured to perform the method provided in the second aspect, for example, the processing unit and/or the communication unit.

Optionally, the transceiver may be a transceiver circuit. Optionally, the input/output interface may be an input/output circuit.

According to a fifth aspect, an anomaly event handling apparatus is provided. The apparatus includes: a memory, configured to store a program; and a processor, configured to execute the program stored in the memory, where when the program stored in the memory is executed, the processor is configured to perform the method provided in the first aspect, the second aspect, or the third aspect.

According to a sixth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the foregoing inputted information, the transceiver obtains/receives the foregoing information, and inputs the information into the processor. Further, after the transceiver receives the foregoing information, other processing may need to be performed on the information before the information is inputted into the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be respectively disposed on different chips. A type of the memory and a manner of disposing the memory and the processor are not limited in this embodiment of this application.

According to a seventh aspect, a computer-readable storage medium is provided. The computer-readable medium stores program code executed by a device, and the program code is for performing the method provided in the first aspect, the second aspect, or the third aspect.

According to an eighth aspect, a computer program product including instructions is provided. When the computer program product runs on a computer, the computer is enabled to perform the method provided in the first aspect, the second aspect, or the third aspect.

According to a ninth aspect, a chip is provided. The chip includes a processor and a communication interface. The processor reads, through the communication interface, instructions stored in a memory, to perform the method provided in the first aspect, the second aspect, or the third aspect.

Optionally, in an implementation, the chip may further include the memory. The memory stores the instructions, and the processor is configured to execute the instructions stored in the memory. When the instructions are executed, the processor is configured to perform the method provided in the first aspect, the second aspect, or the third aspect.

According to a tenth aspect, an anomaly event handling system is provided, including the network management entity in the first aspect and the terminal device in the second aspect.

### BRIEF DESCRIPTION OF DRAWINGS

FIG. 1 is a diagram of a network architecture 100;
FIG. 2 is an example flowchart of an anomaly event handling method 200;
FIG. 3 is a diagram of a method 300 for obtaining topology information of a terminal device and an access network device according to an embodiment of this application;
FIG. 4 is a diagram of a method 400 for obtaining anomaly information of a terminal device according to an embodiment of this application;
FIG. 5 is an example flowchart of an anomaly event handling method 500;
FIG. 6 is a block diagram of an anomaly event handling apparatus 600 according to an embodiment of this application;
FIG. 7 is a block diagram of an anomaly event handling apparatus 700 according to an embodiment of this application; and
FIG. 8 is a simplified diagram of a structure of a network device.

### DESCRIPTION OF EMBODIMENTS

The following describes technical solutions of this application with reference to the accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

First, a network architecture applicable to this application is briefly described as follows.

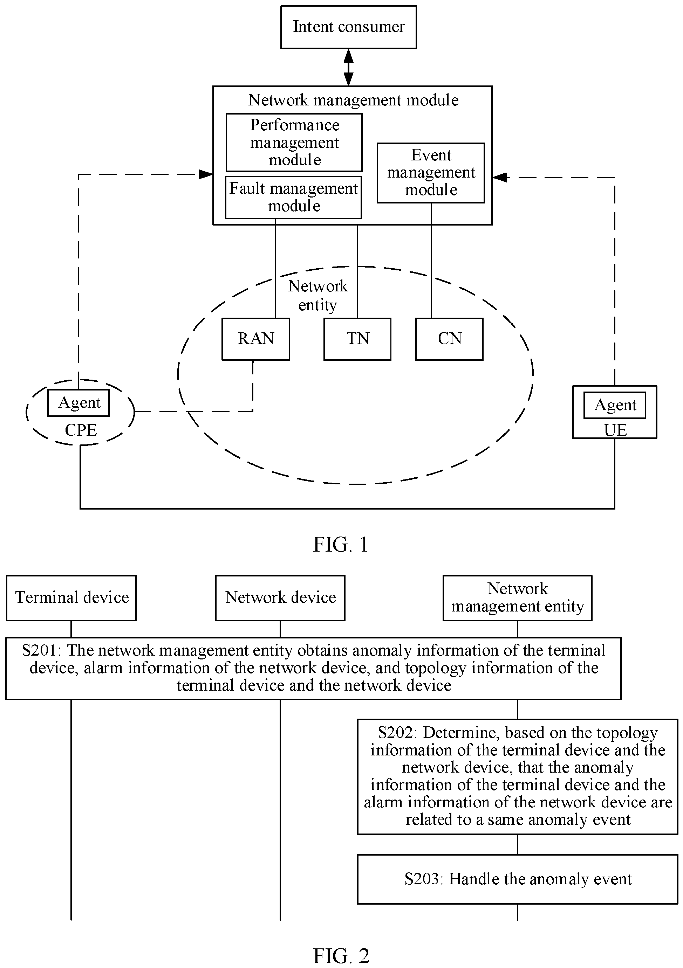

For example, FIG. 1 is a diagram of a network architecture 100.

As shown in FIG. 1, the network architecture 100 may include an intent consumer, a network management module, a network entity, a terminal device (User equipment, UE), and a customer premises equipment (Customer premises equipment, CPE). The network management module may include a performance management module, a fault management module, and an event management module. The network entity may include a radio access network (Radio access network, RAN) device, a transmission network (Transportation network, TN) device, and/or a core network (Core network, CN) device. The UE may include a UE agent (UE agent) module, and the CPE may include a CPE agent (CPE agent) module.

The intent consumer may communicate with the network management module. The network management module may separately communicate with the RAN device, the TN device, and the CN device, or may separately communicate with the CPE agent module and the UE agent module. The CEP agent module may separately communicate with the RAN device and the UE agent module.

The following briefly describes network elements shown in FIG. 1.
1. The intent consumer may be an object that purchases or uses a management service, an event management service use party, an operator, a tenant, a third-party internet vendor, a communication service management function (Communication service management function, CSMF) entity, or the like.
2. The event management module is also referred to as an event management node and is a module that generates and manages events. In a cross-area scenario, the event management module may be a network slice management function (Network slice management function, NSMF) module. In a single-area scenario, the event management module may be a network slice subnet management function (Network slice subnet management function, NSSMF) module.
   In this application, the event management module may alternatively be an evolved fault management module, a fault management module to which an event management function is added, or a fault management module to which an event management service is added. The event management module may be built in an operation, administration and maintenance (Operation, administration and maintenance, OAM) entity or a network management entity.
3. The fault management module is configured to manage a transaction related to a network fault. For example, the fault management module may collect alarm information, and handle and clear a performance alarm or a fault alarm. The fault management module may alternatively be combined with the event management module to become an evolved fault management module, or a fault management module to which an event management service is added.
4. The performance management (Performance producer) module is a provider of a performance-related service in a management plane, and is configured to collect and provide various performance parameters of network entities for use of another network administrator.
5. The network entity may include a RAN device, a TN device, a CN device, and/or a UE. In some scenarios, the network entity further includes a CPE device that manages several UEs, and the CPE device is directly connected to the RAN device.
6. The UE agent module is a management module in the UE and is responsible for collecting UE-related management data.
   If the UE communicates with the RAN device through the CPE device, the UE agent module may alternatively be included in the CPE device.
7. CPE: The CPE is a device that manages the UE, and may be understood as a server of the UE. For example, if several UEs are connected to one CPE, the CPE manages the several UEs connected to the CPE.
8. The CPE agent module is a management module in the CPE device and is responsible for collecting UE-related management data.

In this application, the RAN device may be responsible for user access, and may provide a function of accessing a communication network for the terminal device. Specifically, the RAN device may be a radio network device in a 3rd generation partnership project (3rd generation partnership project, 3GPP) network, or may be an access point in a non-3GPP (non-3GPP) network.

The RAN device may use different wireless access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like.

The RAN device can be further responsible for functions such as radio resource management, quality of service (quality of service, QoS) management, and data compression and encryption on an air interface side. The base station provides an access service for the terminal device, and further completes forwarding of a control signal and user data between the terminal device and a core network.

The RAN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission reception point (transmission reception point, TRP), or the like; may be a gNB or a transmission point (TRP or TP) in a 5G (for example, NR) system, or one antenna panel or a group of antenna panels (including a plurality of antenna panels) of a base station in the 5G system; or may be a network node constituting a gNB or a transmission point, for example, a distributed unit (distributed unit, DU), or a base station in a next-generation 6G communication system. A specific technology and a specific device form used by the base station are not limited in embodiments of this application.

The UE may include various handheld devices having a wireless communication function, vehicle-mounted devices, wearable devices, or computing devices, or another processing device connected to a wireless modem, and various forms of terminals, mobile stations (mobile stations, MSs), terminals (terminals), or soft terminals, for example, water meters, electric meters, and sensors.

For example, the user equipment in embodiments of this application is an access terminal, a user unit, a user station, a mobile station, a relay station, a remote station, a remote terminal, a mobile device, a user terminal (user terminal), a terminal device (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a user equipment in a 5G network, a user equipment in a future evolved public land mobile network (public land mobile network, PLMN), or a user equipment in a future internet of vehicles. This is not limited in embodiments of this application.

By way of example, and not limitation, in embodiments of this application, the wearable device is also referred to as a wearable intelligent device, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data interaction, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, or smart jewelry for monitoring physical signs.

In addition, the user equipment in embodiments of this application may alternatively be a user equipment in an internet of things (internet of Things, IoT) system. An IoT is an important part of development of future information technologies. A main technical feature of the IoT is to connect an object to a network by using a communication technology, to implement an intelligent network of human-machine interconnection and interconnection of things. In embodiments of this application, an IoT technology is used to implement massive connections, deep coverage, and terminal power saving by using, for example, a narrowband (narrowband, NB) technology. In addition, in embodiments of this application, the user equipment further includes a smart printer, a train detector, and a gas station sensor. Main functions include collecting data (for some user equipments), receiving control information and downlink data of an access network device, sending an electromagnetic wave, and transmitting uplink data to the access network device.

Currently, a communication system is applied to a conventional terminal user, and is also applied to some industry users, for example, industry users such as an internet of vehicles, a smart campus, smart healthcare, and smart transportation. However, because the foregoing industry users have high requirements on network reliability and service experience, and have low tolerance for service experience deterioration,
if a fault occurs in a communication process, in a solution, a network element in the communication system may report alarm information to a management data analysis module, so that the management data analysis module may analyze a fault cause based on the alarm information and provide an optimization or solution suggestion. The alarm information may include alarm data information, performance data information, configuration data information, RAN network topology information (where the RAN network topology information is used to determine a specific module, in a RAN, that generates an alarm or is anomalous. For example, if the RAN network topology information includes topology information of a CU and a DU in the RAN, the RAN network topology information is used to determine that the CU or the DU generates an alarm or is anomalous), and link information.

However, the alarm information reported in the foregoing manner can only help optimize or resolve a fault that occurs on a network element on a network side. If a fault is caused by the UE, performance of the network element on the network side may be affected, and an alarm of the network element on the network side may be caused. However, based on alarm information of the network element on the network side, only delimitation can be performed on the network side, and a management domain in which the fault occurs cannot be found and determined (where the management domain may be the UE, the RAN, a CN, and a TN, and the management domain in which the fault occurs is the UE herein). Consequently, the alarm of the network element on the network side cannot be cleared. As a result, continuous alarms are generated, causing poor user experience.

In view of this, this application provides an anomaly event handling method and apparatus, to ameliorate the foregoing problem.

To better understand embodiments, the following descriptions are provided herein.
1. The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.
2. The aspects or features of embodiments of this application may be implemented by using a method or an apparatus, or may be implemented through a product using standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain and/or carry instructions and/or data.
3. The network management entity in embodiments of this application is an entity including an event management module (for example, the event management module in FIG. 1). In an implementation, the network management entity may be built in an OAM entity.
4. The term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

FIG. 2 is an example flowchart of an anomaly event handling method 200. The method 200 may be used to optimize and handle an anomaly event in a communication system. The method 200 may include the following steps.

S201: A network management entity obtains anomaly information of a terminal device, alarm information of a network device, and topology information of the terminal device and the network device.

The network device in this method may include an access network device and a core network device, or include only the access network device.

Specifically, the network management entity may receive the anomaly information related to the terminal device from an agent module of the terminal device or a server (for example, a customer premises equipment, where one customer premises equipment may manage several terminal devices) that manages the terminal device. The network management entity may further receive the alarm information of the network device from the access network device and/or the core network device, and receive the topology information of the terminal device and the network device from the access network device. The topology information of the terminal device and the network device is topology information including terminal device information and network device information.

For example, when the alarm information of the network device sent by the core network device to the network management entity indicates an end-to-end latency alarm, the access network device may not send the alarm information to the network management entity.

The agent module of the terminal device is configured to collect performance, an anomaly, an alarm, and/or experience of the terminal device, and other data. The agent module of the terminal device may be a built-in or external application (Application, APP) of the terminal device, or a management module of the terminal device, or a server related to the terminal device. If the terminal device is directly connected to the network device, the agent module of the terminal device is located inside the terminal device. If the terminal device is connected to the network device through the customer premises equipment, the agent module of the terminal device is located in the customer premises equipment.

The anomaly information of the terminal device may indicate at least one of the following anomalies of the terminal device: a poor quality problem, a service experience anomaly, a network information change, or a network anomaly detected by the terminal device.

For example, the poor quality problem may include a poor service quality problem of the terminal device and/or a poor network connection quality problem of the terminal device. The service experience anomaly may include a frequent screen blurring problem of the terminal device and/or a network freezing problem of the terminal device. The network information change may include at least one of a change of a cell accessed by the terminal device, a change of a spectrum corresponding to the terminal device, a change of a type of a network accessed by the terminal device, or a change of an internet protocol (Internet protocol, IP) address of the terminal device. The network anomaly detected by the terminal device includes at least one of the following: a wireless registration failure, a PDU session establishment failure, a massive antenna beam access selection failure, an RRC reconnection anomaly, an RRC random access anomaly, an RRC reconfiguration anomaly, an RRC reestablishment anomaly, transmission network congestion, one-way audio (for example, during a call, a voice of a peer party cannot be heard and only their own voice can be heard), high TCP retransmission, or frequent RRC reestablishment.

In an implementation, the anomaly information may include information indicating the terminal device (ObjectInstance), service type (ServiceType) information, application type (APPType) information, and/or occurrence time (AlarmRaisedTime) information of an anomaly event. The anomaly information of the terminal device may further include at least one of the following information: an identifier (NotificationID) of the anomaly information of the terminal device, a type (NotificationType) of the anomaly event, change time (AlarmChangedTime) of the anomaly event, clearance time (AlarmClearedTime) of the anomaly event, or a preset threshold (ThresholdInfo) of the anomaly event.

The information indicating the terminal device may be information about an object instance (objectinstance), that is, information about an entity that uploads anomaly information. In the solution of this application, the object instance is the terminal device. Therefore, the information about the object instance is the information indicating the terminal device (for example, may be identification information of the terminal device). The service type information may indicate a type of a service (for example, a voice service, a video service, a virtual reality service, or a game service) of the terminal device. The application type information indicates a type of an application (for example, an application such as WeChat, Taobao, or Youku) of the terminal device. The occurrence time information of the anomaly event indicates occurrence time of the anomaly event. The identification information of the anomaly information of the terminal device may indicate an identifier of each piece of anomaly information detected by the terminal device. Information about the type of the anomaly event may indicate an anomaly event of a new type, an existing anomaly event whose type is changed and that has not been cleared, or an anomaly event that has been cleared. The change time of the anomaly event may indicate time at which severity of the anomaly event changes. The clearance time of the anomaly event may indicate time at which the anomaly event is cleared and that is not confirmed. The preset threshold of the anomaly event indicates a preset threshold for sending the anomaly information. For example, the preset threshold may be a threshold of a packet loss rate and/or a latency of a data packet in a time period, or may be duration of screen blurring of the terminal device, or may be duration of network freezing of the terminal device. In an implementation, the anomaly information of the terminal device is reported to the network management entity only when the anomaly event is greater than or equal to the preset threshold of the anomaly information.

In addition, the alarm information of the network device may indicate that an alarm event occurs on the network device. The alarm information of the network device may include alarm data information, performance data information, and/or configuration data information. Further, the alarm data information may be user plane alarm data information, radio frequency unit alarm data information, and/or cell interruption alarm data information. The performance data information may be measurement information of performance deterioration and/or a performance anomaly based on a monitoring threshold of performance. For example, the performance may be an average throughput of a terminal device in a cell. When performance data deteriorates and exceeds a preset threshold, an alarm is generated. The configuration data information may include execution data information, and the execution data information may include change information or configuration information of various parameters in a network.

For example, the topology information of the terminal device and the network device may indicate links of the terminal device and the network device, or the topology information of the terminal device and the network device may include link information of an access network device and all terminal devices connected to the access network device. For example, the topology information of the terminal device and the network device may indicate that there is a radio resource control connection between the terminal device and the network device or there is a radio resource control connection between the network device and a terminal device connected to the network device. The terminal device communicates with the network device in the foregoing network topology or on the foregoing link. The network management entity may determine, based on the topology information of the terminal device and the network device, that the terminal device and the network device are on a same communication link.

S202: The network management entity determines, based on the topology information of the terminal device and the network device, that the anomaly information of the terminal device and the alarm information of the network device are related to a same anomaly event.

The anomaly event is that a communication link between the terminal device and the network device is anomalous.

The network management entity may receive the anomaly information of the terminal device, the alarm information of the network device, and the topology information of the terminal device and the network device, and determine, based on the topology information of the terminal device and the network device, that the anomaly information of the terminal device and the alarm information of the network device are related to the same anomaly event. The anomaly event may also be referred to as an interruption event. The topology information of the terminal device and the network device indicates that the terminal device and the network device are in a same network topology or on the same link.

Optionally, the anomaly information of the terminal device and the alarm information of the network device are received by the network management entity within preset time. The network management entity may determine, based on the topology information indicating that the terminal device and the network device are in the same network topology or on the same link, that the anomaly information of the terminal device and the alarm information of the network device that are received within the preset time are related to the same anomaly event.

The preset time may be an empirical value obtained through statistics collection based on alarm information in a communication network. For example, after a fault alarm occurs on the access network device, an alarm of the core network device may also be caused. After statistics on a difference between alarm time of the access network device and alarm time of the core network device is collected, the empirical value of the preset time may be determined by considering a difference for alarm time of each node on a same link. Each node on the same link may include the terminal device and the network device. The network device may include the access network device, or include the access network device and the core network device. For example, the empirical value is usually less than 2 minutes. In this case, the preset time may be set to 2 minutes. The network management entity may determine, based on the topology information indicating that the terminal device and the network device are in the same network topology or on the same link, that the anomaly information of the terminal device and the alarm information of the network device in the same network topology or on the same link that are received within the 2 minutes are related to the same anomaly event.

In addition, the preset time may alternatively be an analysis value obtained by analyzing historical information and future prediction information in the communication network through artificial intelligence. The analysis value is optimal preset time obtained by analyzing historical data and prediction data.

It should be understood that, in another possible implementation, the network management entity may alternatively determine, within a preset time period based on topology information of the network device, that received continuous alarm or anomaly information of an entity in a same network topology is related to a same anomaly event. For example, the network device may be an access network device, the access network device may include a control unit and a user unit, and the control unit and the user unit may separately generate alarm information. A separate control unit and user unit continuously generate a same type of alarm information. The network management entity may determine, within preset time based on topology information of the control unit and the user unit, that the continuous alarm information received from the control unit and the user unit in the same network topology is related to the same anomaly event, and perform dispatch handling on the determined same anomaly event. In this scenario, there is no delimitation process for dispatch handling (that is, determining the anomaly event that a specific entity is anomalous). After the anomaly event is determined, root cause analysis and an optimization suggestion may be provided.

S203: The network management entity handles the anomaly event.

For example, after determining that the anomaly information of the terminal device and the alarm information of the network device are related to the same anomaly event, the network management entity may analyze, based on the anomaly information of the terminal device, an occurrence cause of the same anomaly event, determine an anomaly type of the same anomaly event, and correspondingly handling the same anomaly event.

The network management entity may eliminate the anomaly event in the following manner.

In one aspect, after determining that the same anomaly event is that the terminal device is anomalous, the network management entity may determine, based on the anomaly information of the terminal device and the alarm information of the network device, that the cause of the anomaly event is a problem of the terminal device or a problem of a server of the terminal device. For example, the problem of the terminal device may include that a pixel or a resolution of a camera of the terminal device does not match a service requirement (for example, when the pixel or the resolution of the camera of the terminal device does not match the service requirement, an operator of the terminal device cannot complete a corresponding operation in a timely manner, or give a corresponding feedback to the network device in a timely manner, and the network device may send an alarm based on excessively long response time). The problem of the server of the terminal device may include that data congestion occurs because a buffer of the server is exceeded. Further, if the problem of the terminal device exists, the network management entity may eliminate the anomaly by replacing the terminal device or modifying a configuration (for example, camera configuration information of the terminal device or resolution configuration information of the terminal device) of the terminal device. If the problem of the server of the terminal device exists, the network management entity may finally eliminate the anomaly by increasing the buffer of the server. In another aspect, after the network management entity determines that the same anomaly event is that the terminal device and the access network device are anomalous (for example, an air interface between the terminal device and the access network device is anomalous), the network management entity may analyze a transmission status of the anomalous air interface between the terminal device and the access network device with reference to anomaly information reported by the terminal device and another terminal device managed by the network management entity. A possible cause may be that the air interface between the terminal device and the access network device is affected, for example, small-range strong interference such as a man-made network shielding measure exists near air interfaces of several terminal devices, or a coverage hole exists in locations of the foregoing several terminal devices due to external object blocking. Further, the network management entity may provide an optimization suggestion for removing network shielding or removing the external object blocking, and finally eliminate the anomaly.

Based on the foregoing solution, the network management entity does not determine the anomaly event based on a single piece of anomaly information of the terminal device or determine the anomaly event based on a single piece of alarm information of the network device, but determines, based on the topology information of the terminal device and the network device, that the anomaly information of the terminal device and the alarm information of the network device in the same network topology (or on the same link) are related to the same anomaly event, so that the same anomaly event is subsequently handled (for example, one piece of anomaly handling information for the same anomaly event is generated). Further, while a periodicity of handling the anomaly event is shortened and efficiency of handling the anomaly event by the network management entity is improved, signaling sending may be further reduced, and network resources are saved.

Optionally, to handle the same anomaly event, that the network management entity handles the anomaly event may include: The network management entity may determine, based on a transmission status, of a data packet that includes a flag field and that is configured by the network management entity, between the terminal device and the network device, that the anomaly event is that the network device and the terminal device are anomalous or the terminal device is anomalous; and then the network management entity may generate one piece of anomaly handling information based on the anomaly event that the terminal device and the network device are anomalous or the terminal device is anomalous. The anomaly handling information is used to perform a dispatch operation on the same anomaly event. For example, the network management entity may send the anomaly handling information to a management person or an upper-layer management device, to complete the dispatch operation.

The transmission status of the data packet including the flag field between the network device and the terminal device may include two cases: normal transmission or abnormal transmission of the data packet including the flag field between the network device and the terminal device.

Based on the foregoing solution, the network management entity may generate the anomaly handling information, and perform dispatch handling on the anomaly event to handle the anomaly event. Further, in comparison with a manner of separately determining the anomaly event based on the single piece of anomaly information of the terminal device or the single piece of alarm information of the network device and performing dispatch handling, this solution can improve dispatch handling efficiency, reduce signaling sending, and save network resources.

In a possible implementation, if the transmission status of the data packet including the flag field between the network device and the terminal device is normal transmission, the network management entity may determine, based on the anomaly information of the terminal device, the alarm information of the network device, and the transmission status, of the data packet that includes the flag field and that is configured by the network management entity, between the terminal device and the network device, that the anomaly event is that the terminal device is anomalous.

For example, if the network management entity receives the alarm information of the network device, the anomaly information indicating that service experience of the terminal device is anomalous, and transmission information indicating that the transmission status of the data packet including the flag field between the network device and the terminal device is normal, the network management entity may determine that the anomaly event is that the terminal device is anomalous.

In another possible implementation, if the transmission status of the data packet including the flag field between the network device and the terminal device is abnormal transmission, the network management entity may determine, based on the transmission status, of the data packet that includes the flag field and that is configured by the network management entity, between the terminal device and the network device, that the anomaly event is that the terminal device and the network device are anomalous (for example, an air interface between the terminal device and the network device is anomalous) or the network device is anomalous. Further, if no same anomaly occurs on all other terminal devices connected to the network device, it may be determined that the anomaly event is the terminal device and the network device are anomalous (for example, the air interface between the terminal device and the network device is anomalous). If no same anomaly occurs on all other terminal devices connected to the network device, it may be determined that the anomaly event is that the network device is anomalous.

Optionally, the network management entity may alternatively determine, based on the anomaly information of the terminal device, the alarm information of the network device, and the transmission status of the data packet including the flag field between the network device and the terminal device, that the anomaly event is that the terminal device and the network device are anomalous or the terminal device is anomalous.

For example, if the network management entity receives only transmission information indicating that the transmission status of the data packet including the flag field between the network device and the terminal device is abnormal, and does not receive information indicating that the transmission status is abnormal and the data packet including the flag field is transmitted abnormally between the network device and another terminal device, if the network management entity further receives the anomaly information (for example, the anomaly information indicating that a network anomaly occurs on the terminal device) of the terminal device and the alarm information of the network device, the network management entity may determine that the anomaly event is that the air interface between the terminal device and the network device is anomalous.

In an implementation, the data packet including the flag field may be a packet data convergence protocol (Packet data convergence protocol, PDCP) data packet with a flag field. Between the terminal device and the network device, a packet loss status, an out-of-order transmission status, and a quantity of repeated transmission times of communication between the terminal device and the network device are recorded in a PDCP status report (PDCP status report, PDCP SR) in an existing protocol. However, the PDCP status report is included in the PDCP data packet, and the network management entity cannot directly read content of the PDCP data packet. Therefore, the network device and the terminal device need to negotiate specific PDCP data packets whose status reports are to be collected statistics on, and the network device collects statistics on and reports the status reports to the network management entity.

For example, the network management entity may send, to the network device, information about the data packet that includes the flag field and that is configured by the network management entity. After detecting the transmission status of the data packet including the flag field between the terminal device and the network device, the network device reports, to the network management entity, information about the transmission status that is of the data packet including the flag field between the terminal device and the network device and that is detected by the network device.

The network device may receive a general packet radio service tunnelling protocol-user plane (General packet radio service tunnelling protocol-user plane, GTP-U) PDCP data packet with a flag field from the network management entity, and send a sequence number of the data packet to the terminal device by using a PDCP data report (PDCP data report) request message. After receiving the PDCP data packet with the flag field and performing detection, the terminal device sends a packet data convergence protocol status report (Packet data convergence protocol status report, PDCP SR) of the PDCP data packet with the flag field to the network device by using a PDCP data report message. After the network device collects statistics on a packet loss status and an out-of-order transmission status of the PDCP SR, and a quantity of repeated transmission times, the information about the transmission status that is of the data packet including the flag field between the terminal device and the network device and that is detected by the network device is formed and sent to the network management entity. The network management entity may learn of the transmission status of the data packet including the flag field between the terminal device and the network device. If a packet loss rate of the PDCP SR is greater than or equal to a preset threshold, or a quantity of out-of-order transmission times is greater than or equal to a preset threshold, or the quantity of repeated transmission times is greater than or equal to a preset threshold, it may indicate that the data packet with the flag field is transmitted abnormally between the terminal device and the network device.

Based on the foregoing solution, it may be determined, based on the anomaly information of the terminal device, the alarm information of the network device, and the transmission status, of the data packet that includes the flag field and that is configured by the network management entity, between the terminal device and the network device, that the anomaly event is that the terminal device is anomalous or that the anomaly event is that the terminal device and the network device are anomalous. This avoids a phenomenon that a network side is affected and continuously sends alarm information because the terminal device is anomalous or the terminal device and the network device are anomalous, but the anomaly event that the terminal device is anomalous or the anomaly event that the terminal device and the network device are anomalous cannot be accurately determined based on only the alarm information of the network side. Further, after determining the anomaly event, the network management entity may handle the anomaly event based on the type of the anomaly event, thereby improving efficiency of handling the anomaly event.

Optionally, to meet an expectation or an objective of an intent consumer, the method 200 may further include: The intent consumer sends intent input information to the network management entity. Correspondingly, the network management entity receives the intent input information from the intent consumer.

Specifically, the network management entity may receive the intent input information from the intent consumer, and correspondingly, the intent consumer may send the intent input information to the network management entity. The intent input information indicates an objective proposed by the intent consumer for an intent producer (that is, the network management entity in this embodiment), and may include at least one of the following information:
a to-be-handled event (for example, a reported anomaly event), an indication for reporting a quantity of handled events (for example, a quantity A of handled anomaly events is reported before a time period, and a quantity B of handled anomaly events is reported after a time period, where B is less than or equal to A), and a time limit for handling the anomaly event (for example, a time limit for closing the anomaly event, in other words, the time limit for handling the anomaly event indicates that the anomaly event needs to be closed within the time limit), where the anomaly event is the to-be-handled event or the handled event.

For example, the to-be-handled event included in the intent input information may include an anomaly event in three types: the anomaly event, an event of performance deterioration of the network device or performance deterioration of the terminal device, or a risk event (for example, an event that the intent consumer predicts a risk based on an empirical value but does not occur yet). The network management entity may handle the anomaly event (for example, the anomaly event in this embodiment of this application) based on the intent input information, and does not handle the event of performance deterioration of the network device or performance deterioration of the terminal device, or the risk event.

For example, for the time limit for handling the anomaly event (for example, the anomaly event in this embodiment of this application) included in the intent input information, the network management entity needs to meet the time limit for handling the anomaly event (for example, the anomaly event in this embodiment of this application) proposed by the intent consumer as much as possible. If handling of the anomaly event (for example, the anomaly event in this embodiment of this application) is not completed within the time limit, the network management entity may check or optimize a procedure of handling the anomaly event, and feed back actual time for handling the anomaly event (for example, the anomaly event in this embodiment of this application) to the intent consumer.

Optionally, to feed back a status of handling the anomaly event to the upper-layer intent consumer of the network management entity, the method 200 may further include: The network management entity sends intent output information to the intent consumer. Correspondingly, the intent consumer receives the intent output information from the network management entity.

Specifically, the network management entity may send the intent output information to the intent consumer, and correspondingly, the intent consumer may receive the intent output information from the network management entity. The intent input information indicates a status of completion of the anomaly event, represents a status of handling the anomaly event by the network management entity, is a feedback of an intent or the expectation proposed by the intent consumer, and may include at least one of the following information:
a change of time for handling the anomaly event (for example, the time for handling the anomaly event is shortened by D% within a time periodicity), a quantity of handled events (for example, a quantity of handled anomaly events reported multiple times in a time period), or the handled event (for example, a handled anomaly event).

For example, after completing handling of the anomaly event in this embodiment of this application, the network management entity may feed back, to the intent consumer, that handling of the anomaly event is completed.

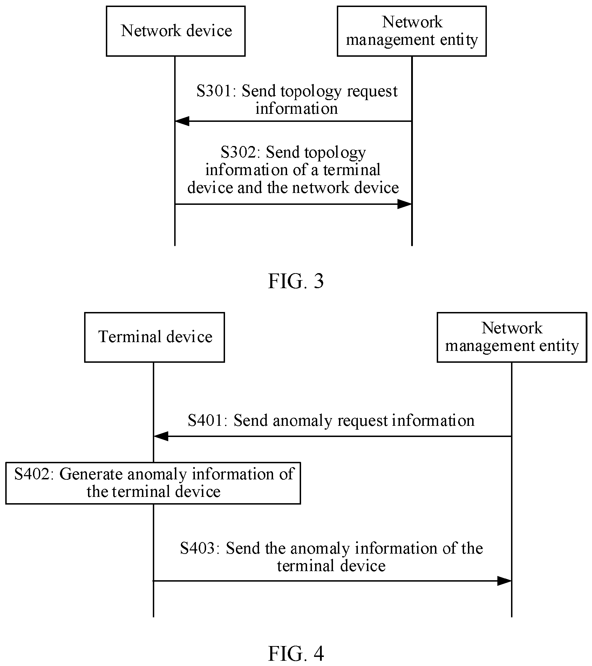

Optionally, to obtain the topology information of the terminal device and the network device in the method 200, the network management entity may obtain the topology information of the terminal device and the network device by using a method 300 for obtaining topology information of a terminal device and a network device. FIG. 3 is a diagram of a method 300 for obtaining topology information of a terminal device and a network device according to an embodiment of this application. As shown in FIG. 3, the method 300 may include the following steps.

S301: A network management entity sends topology request information.

Specifically, the network management entity may send the topology request information to a network device. Correspondingly, the network device may receive the topology request information from the network management entity. The topology request information is used to indicate to periodically report topology information of a terminal device and the network device, and/or to report the topology information of the terminal device and the network device in a manner of meeting a reporting preset condition. The topology information of the terminal device and the network device may include information about a topology including the terminal device and an access network device (for example, information about a topology including the access network device and all terminal devices connected to the access network device), and information about a topology including the access network device and a core network device.

In a possible implementation, the topology request information is used to indicate to periodically report topology information including terminal device information and network device information. After receiving the topology request information, the network device may periodically report the topology information of the terminal device and the network device to the network management entity. Periodicity information is configured by the network management entity.

In another possible implementation, the topology request information is used to indicate to report the topology information of the terminal device and the network device in a manner of meeting a preset condition. For example, the preset condition may be that a network topology relationship between the terminal device and the network device in a communication network changes. For example, when the terminal device switches the network device, the topology information of the terminal device and the network device is reported.

In still another possible implementation, the topology request information may be used to indicate to periodically report the topology information of the terminal device and the network device and to report the topology information of the terminal device and the network device in a manner of meeting a reporting preset condition.

S302: The network device sends the topology information of the terminal device and the network device to the network management entity. Correspondingly, the network management entity receives the topology information of the terminal device and the network device.

Specifically, the network management entity may receive the topology information of the terminal device and the network device from the network device. The topology information of the terminal device and the network device may include the topology information of the terminal device and the access network device, or include the topology information of the terminal device and the access network device and the topology information of the access network device and the core network device.

Based on the foregoing solution, this may help the network management entity obtain the topology information of the terminal device and the network device, so that the network management entity may determine, based on the topology information of the terminal device and the network device, that anomaly information of the terminal device and alarm information of the network device are related to a same anomaly event, and subsequently handle the same anomaly event. Further, this helps reduce signaling sending and save network resources while a periodicity of handling the anomaly event is shortened, dispatch for the anomaly event is reduced, and efficiency of handling the anomaly event by the network management entity is improved.

Optionally, to obtain the anomaly information of the terminal device in the method 200, the network management entity may obtain the anomaly information of the terminal device by using a method 400 for obtaining anomaly information of a terminal device. FIG. 4 is a diagram of a method 400 for obtaining anomaly information of a terminal device according to an embodiment of this application. As shown in FIG. 4, the method 400 may include the following steps.

S401: A network management entity sends anomaly request information.

Specifically, the network management entity may send the anomaly request information to a terminal device. Correspondingly, the terminal device may receive the anomaly request information from the network management entity. The anomaly request information is used to request to report anomaly information of the terminal device. Further, the anomaly request information may be used to indicate the terminal device to periodically report, after the terminal device discovers an anomaly, the anomaly information of the terminal device, and/or to report the anomaly information of the terminal device in a manner of meeting a preset condition for reporting the anomaly information of the terminal device, or may be used to indicate to report the anomaly information of the terminal device in a preset manner. The preset condition for reporting the anomaly information of the terminal device may be that the terminal device discovers the anomaly.

For example, the network management entity may send the anomaly request information to the terminal device through a core network device, or may send the anomaly request information to the terminal device through a network device. An interface between the network management entity and the network device or an interface between the network management entity and the core network device may be an existing interface, or may be a new interface.

Further, when the network management entity sends the anomaly request information to the terminal device through the core network device, the anomaly request information may be carried in a signaling trace activation message (signalling trace activation message from CN nodes) from a core network node, for example, an initial context setup message (Initial Context Setup message) or a handover request message (handover request message). When the network management entity sends the anomaly request information to the terminal device through the network device, the anomaly request information may be directly delivered by reusing a minimization of drive tests (minimization of drive tests, MDT) interface, or may be carried in an RRC connection establishment message.

S402: The terminal device generates the anomaly information of the terminal device.

Specifically, after the terminal device receives the anomaly request information from the network management entity, and the terminal device is anomalous, the terminal device may generate the anomaly information of the terminal device.

In another possible implementation, the terminal device may not depend on the anomaly request information sent by the network management entity, and may generate the anomaly information of the terminal device provided that the terminal device discovers the anomaly.

S403: The terminal device sends the anomaly information of the terminal device.

Specifically, the terminal device sends the anomaly information of the terminal device to the network management entity, and correspondingly, the network management entity receives the anomaly information of the terminal device from the terminal device.

Based on the foregoing solution, this may help the network management entity obtain the anomaly information of the terminal device. After determining that the anomaly information of the terminal device and alarm information of the network device are related to a same anomaly event, the network management entity may handle the same anomaly event. Further, while a periodicity of handling the anomaly event may be shortened, dispatch for the anomaly event is reduced, and efficiency of handling the anomaly event by the network management entity is improved, signaling sending may be further reduced, and network resources are saved.

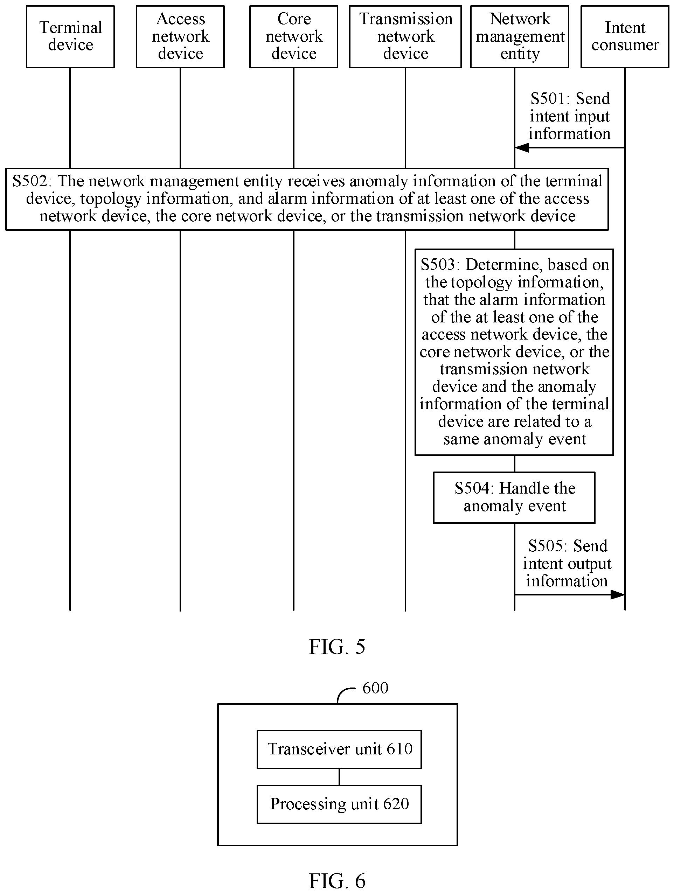

FIG. 5 is an example flowchart of an anomaly event handling method 500. The method 500 may be used to optimize and handle an anomaly event in a communication system. The method 500 may include the following steps.

S501: An intent consumer sends intent input information to a network management entity. Correspondingly, the network management entity receives the intent input information from the intent consumer.

Specifically, for descriptions of the intent input information, refer to related descriptions of the intent input information in the method 200. For brevity, details are not described herein in this application.

S502: The network management entity receives anomaly information of a terminal device, topology information, and alarm information of at least one of an access network device, a core network device, or a transmission network device.

The topology information may indicate that the terminal device, the access network device, and the transmission network device and/or the core network device are in a same network topology or on a same link, and may include topology information of the access network device and the terminal device, and also include topology information of the transmission network device and/or topology information of the core network device. In an implementation, the topology information may include only topology information between entities that report anomaly information and alarm information to the network management entity.

The topology information of the access network device and the terminal device may mean that there is an RRC connection between the terminal device and the access network device. The terminal device communicates with the transmission network device and/or the core network device through the access network device in the same network topology or on the same link, which means the access network device that has the RRC connection to the terminal device, and a transmission network node and/or a core network node that are/is connected to the access network device.

After obtaining the topology information, the network management entity may generate, based on the topology information, information about a network topology including the terminal device, the access network device, and the transmission network device and/or the core network device, and determine that the terminal device, the access network device, and the transmission network device and/or the core network device are in the same network topology. For a specific manner of obtaining the topology information by the network management entity, refer to related descriptions of obtaining the topology information by the network management entity in the method 300. For brevity, details are not described herein in this application.

In addition, for the anomaly information of the terminal device, refer to related descriptions of the anomaly information of the terminal device in S201. For the alarm information of the at least one of the access network device, the core network device, or the transmission network device, refer to related descriptions of the alarm information of the network device in S201. For a specific manner of obtaining the anomaly information by the network management entity, refer to related descriptions of obtaining the anomaly information by the network management entity in the method 400. For brevity, details are not described herein in this application.

Specifically, the network management entity may receive the anomaly information of the terminal device from the terminal device, receive the alarm information of the access network device from the access network device, receive the alarm information of the transmission network device from the transmission network device, and receive the alarm information of the core network device from the core network device.

S503: The network management entity determines, based on the topology information, that the alarm information of the at least one of the access network device, the core network device, or the transmission network device and the anomaly information of the terminal device are related to a same anomaly event.

Specifically, for descriptions of determining, by the network management entity based on the topology information, that the alarm information of the at least one of the access network device, the core network device, or the transmission network device, and the anomaly information of the terminal device are related to the same anomaly event, refer to related descriptions of determining, by the network management entity based on the topology information of the terminal device and the network device, that the anomaly information of the terminal device and the alarm information of the network device are related to a same anomaly event in S202. For brevity, details are not described herein again in this application.

Further, the network management entity may alternatively determine, based on the topology information, that at least two anomaly events of different network entities in a same network topology (or on a same link) within a preset time period are aggregated into one cross-domain anomaly event. In a subsequent step, the anomaly event may be determined for the cross-domain anomaly event (that is, an anomalous entity is determined), or the cross-domain anomaly event is handled.

Based on the foregoing solution, the network management entity does not separately determine the anomaly event based on a single piece of anomaly information or alarm information, and does not separately perform dispatch handling, but determines, based on the topology information, that the anomaly information of the terminal device and the alarm information of the at least one of the access network device, the transmission network device, or the core network device in the same network topology or on the same link are related to the same anomaly event. Further, a plurality of anomaly events may be aggregated into one cross-domain anomaly event, to facilitate subsequently perform dispatch handling. Further, in this solution, while a periodicity of handling the anomaly event is shortened, dispatch for the anomaly event is reduced, and efficiency of handling the anomaly event by the network management entity is improved, signaling sending may be further reduced, and network resources are saved.

S504: The network management entity handles the anomaly event.

First, after determining, based on the topology information, that the alarm information of the at least one of the access network device, the core network device, or the transmission network device, and the anomaly information of the terminal device are related to the same anomaly event, the network management entity may determine an anomalous entity in the same anomaly event based on the anomaly information of the terminal device, the alarm information of the at least one of the access network device, the core network device, or the transmission network device, and a transmission status, of a data packet that includes a flag field and that is configured by the network management entity, between the terminal device and the at least one of the access network device, the core network device, or the transmission network device.

The transmission status of the data packet including the flag field between the terminal device and the at least one of the access network device, the core network device, or the transmission network device may include two cases: normal transmission or abnormal transmission of the data packet including the flag field between the terminal device and the at least one of the access network device, the core network device, or the transmission network device. An anomalous entity in the anomaly event may be at least one of the terminal device, the access network device, the transmission network device, or the core network device.

In one aspect, when an anomaly occurs on a network side (for example, the access network device, the transmission network device, or the core network device), the network management entity may determine an anomalous entity in the anomaly event in any one of the following manners.

In a first possible implementation, the network management entity receives the anomaly information of the terminal device from the terminal device, receives the alarm information from the access network device, the transmission network device, and the core network device, receives, from the access network device or the transmission network device, information indicating that the transmission status of the data packet including the flag field between the access network device and the transmission network device is normal transmission, and receives, from the core network device or the transmission network device, information indicating that the transmission status of the data packet including the flag field between the transmission network device and the core network device is normal transmission. In this case, the network management entity may determine, based on all the foregoing information, that the anomaly event is that the core network device is anomalous.

In a second possible implementation, the network management entity receives the anomaly information of the terminal device from the terminal device, receives the alarm information from the access network device, the transmission network device, and the core network device, receives, from the access network device or the transmission network device, information indicating that the transmission status of the data packet including the flag field on the transmission network device is normal transmission, and receives, from the transmission network device, information indicating that the transmission status of the data packet including the flag field on the transmission network device is abnormal transmission. In this case, the network management entity may determine, based on all the foregoing information, that the anomaly event is that the transmission network device is anomalous.

In an implementation, the data packet including the flag field may be a GTP-U data packet including a flag field. For example, after directing at a type of service, a type of application, or a terminal device in confirmation report information (for example, may be confirmation report information of the alarm information of the access network device, the transmission network device, or the core network device), the network management entity may specify several IP data packets for a type of application and a type of service of a terminal device, and insert a dedicated sequence number (Sequence number, SN) into GTP-U data packet headers of these data packets. The dedicated sequence number may be carried in the data packet header, and is transmitted between nodes (for example, between the access network device and the transmission network device, or between the transmission network device and the core network device) in a topology or on a link. A receiving end may collect statistics on a packet loss rate and a latency of the data packet including the flag field, to determine a packet loss status and a latency status of communication between the nodes on the link.

For example, in uplink transmission, the access network device may insert a dedicated sequence number into a GTP-U data packet header of an IP data packet, and notify the terminal device; and in downlink transmission, the core network device may insert a dedicated sequence number into a GTP-U data packet header of an IP data packet. In addition, the access network device, the transmission network device, or the core network device may perform application-level detection based on the sequence number inserted into the GTP-U, in other words, may mainly detect sending time and receiving time, a packet loss rate, or an out-of-order transmission status of the data packet with the flag field, and provide statistics on a service level agreement (Service level indicator, SLA) between nodes, mainly including the packet loss rate, the latency, or the out-of-order transmission status. In this way, a packet loss, a latency, or an out-of-order status of any node in the access network device-the transmission network device-the core network device may be detected.

In a third possible implementation, if the transmission status of the data packet including the flag field between the network device and the terminal device is abnormal transmission, the network management entity may determine, based on the anomaly information of the terminal device, the alarm information received from the access network device, the transmission network device, and the core network device, and the transmission status, of the data packet that includes the flag field and that is configured by the network management entity, between the terminal device and the access network device, that the anomaly event is that the terminal device and the access network device are anomalous (for example, an air interface between the terminal device and the access network device is anomalous) or the access network device is anomalous. Further, if a same anomaly occurs on all other terminal devices connected to the access network device, it may be determined that the anomaly event is that the access network device is anomalous.

For example, if the network management entity receives anomaly information indicating that a network anomaly occurs on the terminal device, the alarm information of the access network device, the transmission network device, and the core network device, and transmission information indicating that the transmission status of the data packet including the flag field between the access network device and the terminal device is abnormal, and receives transmission information indicating that the transmission status of the data packet including the flag field between the access network device and another terminal device is abnormal, the network management entity may determine that the anomaly event is that the access network device is anomalous.

Specifically, for descriptions of the transmission information of the data packet including the flag field between the access network device and the terminal device, refer to descriptions of the transmission information of the data packet including the flag field between the network device and the terminal device in S203. For brevity, details are not described herein in this application.

In another aspect, for a case in which the anomaly event is that the terminal device is anomalous or the terminal device and the access network device are anomalous, refer to related descriptions of determining, by the network management entity based on the anomaly information of the terminal device, the alarm information of the access network device, and the transmission status, of the data packet that includes the flag field and that is configured by the network management entity, between the terminal device and the access network device, that the anomaly event is that the terminal device and the access network device are anomalous or the terminal device is anomalous in S203. For brevity, details are not described herein in this application.

Based on the foregoing solution, the network management entity may determine, based on the topology information, that the alarm information of the at least one of the access network device, the core network device, or the transmission network device, and the anomaly information of the terminal device are related to the same anomaly event. Further, the network management entity may determine the anomaly event based on the transmission status, of the data packet that includes the flag field and that is configured by the network management entity, on the communication link including the terminal device and the network device. Optionally, the network management entity may further determine the anomaly event based on the anomaly information of the terminal device, or the alarm information of the access network device, or the alarm information of the transmission network device, or the alarm information of the core network device. In one aspect, the network management entity does not separately determine the anomaly event based on the single piece of anomaly information of the terminal device or the single piece of alarm information of the network device, and does not separately perform dispatch handling. Instead, the network management entity determines that the anomaly information of the terminal device and the alarm information of the network device in the same network topology (or on the same link) are related to the same anomaly event, so that dispatch handling is performed on the same anomaly event. Further, in this solution, while the periodicity of handling the anomaly event is shortened, dispatch for the anomaly event is reduced, and efficiency of handling the anomaly event by the network management entity is improved, signaling sending may be further reduced, and network resources are saved. In another aspect, this solution avoids a phenomenon that the network side is affected and continuously sends alarm information because the terminal device is anomalous or the terminal device and the network device are anomalous, but the anomaly event that the terminal device is anomalous cannot be accurately determined based on only the alarm information of the network side. Therefore, the anomalous entity in the anomaly event can be accurately determined, and efficiency of handling the anomaly event is improved.

Then, after determining the anomaly event, the network management entity may analyze an occurrence cause of the anomaly event based on the anomaly information of the terminal device, or the alarm information of the access network device, or the alarm information of the transmission network device, or the alarm information of the core network device, determine an anomaly type of the anomaly event, and generate anomaly handling information. The anomaly handling information is used to perform a dispatch operation on the same anomaly event. For example, the network management entity may send the anomaly handling information to a management person or an upper-layer management device, to complete the dispatch operation.

Further, the network management entity may eliminate the anomaly event in at least one of the following possible implementations.

In a first possible implementation, if the network management entity has determined that the anomaly event is that the access network device is anomalous, the network management entity may learn of a cause of the anomaly of the access network device based on the anomaly information reported by the terminal device. For example, the anomaly information reported by the terminal device indicates a cause such as network congestion, an excessively large quantity of terminal devices accessing the access network device, or weak cell coverage. The network management entity may finally eliminate the anomaly based on these causes through capacity expansion, antenna downtilt adjustment, joint reception algorithm enhancement, and the like for the access network device.

In a second possible implementation, if the network management entity has determined that the anomaly event is that the core network device is anomalous, the network management entity may eliminate an interference source based on the anomaly information reported by the terminal device, for example, the anomaly information reported by the terminal device indicates that a cause of the anomaly of the core network device is an excessively large end-to-end latency, and air interface transmission of some terminal devices is affected by strong interference, resulting in an increase in a transmission latency, to eliminate the anomaly event.

In a third possible implementation, if the network management entity has determined that the anomaly event is that the transmission network device is anomalous, the anomaly information reported by the terminal device may be used. For example, the anomaly information reported by the terminal device indicates that a cause of the anomaly of the core network device is that a transmission node is faulty, a transmission network capacity is limited, or a transmission line is inappropriately planned. In this way, the network management entity may replace the transmission node, expand the capacity of the transmission network, or directly change the transmission line, to eliminate the anomaly event.

In a possible implementation in which the anomaly event is that the terminal device is anomalous or the terminal device and the access network device are anomalous, for specific descriptions of handling the anomaly event by the network management entity, refer to related descriptions of handling the anomaly event by the network management entity in S203. For brevity, details are not described herein in this application.

S505: The network management entity sends intent output information to the intent consumer. Correspondingly, the intent consumer receives the intent output information from the network management entity.

Specifically, for descriptions of the intent output information, refer to related descriptions of the intent output information in the method 200. For brevity, details are not described herein in this application.

It should be understood that, in another possible implementation, the network management entity may alternatively obtain the alarm information of the network device and topology information of the network device, and determine the anomaly event based on the alarm information of the network device and the topology information of the network device. The anomaly event indicates that a communication link including the network device is anomalous. Finally, the network management entity handles the anomaly event.

For example, a base station in the access network device may include a control unit (Control unit, CU) and a user unit (Data unit, DU). The control unit and the user unit may separately generate alarm information. A separate control unit and user unit continuously generate a same type of alarm information. The network management entity may determine, based on topology information of the control unit and the user unit, that the continuous alarm information of the control unit and the continuous alarm information of the user unit in a same network topology are related to a same anomaly event, and perform dispatch handling on the anomaly event. The same network topology means that the user unit is connected to the control unit, and the control unit is managed by the network management entity. Content of the alarm information generated by the control unit and the user unit may be the same as content of alarm information of a network device in a conventional technology.

Further, the network management entity may determine the anomaly event. For example, if all user units connected to the control unit send alarm information, the network management entity may determine that the anomaly event is that the control unit is anomalous. If another user unit connected to the control unit does not send alarm information, the network management entity may determine that the anomaly event is that the user unit is anomalous. In this embodiment, the anomaly occurs on the base station in the same access network device.

After the anomaly event is determined, the anomaly event may be handled. In other words, root cause analysis and an optimization suggestion may be provided. For example, if a base station generates an alarm such as an increase in a terminal device handover request, an increase in a neighboring cell random access quantity, or an increase in an average downlink latency, and the network management entity may perform root cause analysis to find that the alarm is caused by a fault of a DU in the base station, the network management entity may recommend replacing the DU.

In addition, in this manner, the network management entity may obtain the alarm information of the network device in a preset manner, or may obtain the alarm information of the network device by using the method 400, obtain the topology information of the network device by using the method 300, and receive the intent input information and send the intent output information by referring to related descriptions of receiving the intent input information by the network management entity and sending the intent output information by the network management entity in S203.

Based on the foregoing solution, the network management entity may determine, based on the topology information, that the continuous alarm information of the network device in the same network topology or on the same link is related to the same anomaly event, and subsequently perform dispatch handling on the anomaly event. Further, in this solution, while the periodicity of handling the anomaly event is shortened, dispatch for the anomaly event is reduced, and efficiency of handling the anomaly event by the network management entity is improved, signaling sending may be further reduced, and network resources are saved.

It may be understood that the examples in FIG. 2 to FIG. 5 in embodiments of this application are merely intended to help a person skilled in the art understand embodiments of this application, but are not intended to limit embodiments of this application to specific scenarios in the examples. Definitely, a person skilled in the art can make various equivalent modifications or changes based on the examples in FIG. 2 to FIG. 5, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names used in embodiments of this application do not limit the protection scope of embodiments of this application.

It may be further understood that in the foregoing method embodiments, the method and the operation implemented by the terminal device may also be implemented by a component (for example, a chip or a circuit) of the terminal device. In addition, the method and the operation implemented by the network device may also be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 6 is a block diagram of an anomaly event handling apparatus 600 according to an embodiment of this application. The apparatus 600 includes a transceiver module 610 and a processing module 620. The transceiver module 610 may be configured to implement a corresponding communication function. The transceiver module 610 may also be referred to as a communication interface or a communication unit. The processing module 620 may be configured to implement a corresponding processing function.

Optionally, the apparatus 600 may further include a storage module. The storage module may be configured to store instructions and/or data. The processing module 620 may read the instructions and/or the data in the storage module, so that the apparatus implements actions of the device or the network element in the foregoing method embodiments.

In a design, the apparatus 600 may be the network management entity in the foregoing embodiments, or may be a component (for example, a chip) of the network management entity. The apparatus 600 may implement steps or procedures performed by the network management entity in the foregoing method embodiments. The transceiver module 610 may be configured to perform receiving and sending related operations of the network management entity in the foregoing method embodiments. The processing module 620 may be configured to perform processing related operations of the network management entity in the foregoing method embodiments.

In a possible implementation, the transceiver module 610 is configured to obtain anomaly information of a terminal device, alarm information of a network device, and topology information of the terminal device and the network device; and the processing module 620 is configured to determine an anomaly event based on the anomaly information of the terminal device, the alarm information of the network device, and the topology information of the terminal device and the network device, where the anomaly event indicates that a communication link including the terminal device and the network device is anomalous; and handle the anomaly event.

Optionally, after the network management entity determines the anomaly event, the processing module 620 is specifically configured to determine, based on a transmission status, of a data packet that includes a flag field and that is configured by the network management entity, between the terminal device and the network device, that the anomaly event is that the terminal device and the network device are anomalous or the terminal device is anomalous; and handle the anomaly event and generate anomaly handling information based on the anomaly event that the terminal device and the network device are anomalous or the terminal device is anomalous, where the anomaly handling information is used to handle the anomaly event.

Optionally, the transceiver module 610 is specifically configured to send information about the data packet including the flag field; and after sending the information about the data packet including the flag field, receive information about the transmission status that is of the data packet including the flag field between the terminal device and the network device and that is detected by the network device; and the processing module 620 is specifically configured to determine, based on the anomaly information of the terminal device, the alarm information of the network device, and the information about the transmission status of the data packet including the flag field between the terminal device and the network device, that the anomaly event is that the terminal device and the network device are anomalous or the terminal device is anomalous.

Optionally, the transceiver module 610 is specifically configured to send topology request information, where the topology request information is used to request to report the topology information of the terminal device and the network device; and after sending the topology request information, receive the topology information of the terminal device and the network device.

Optionally, the topology request information is used to indicate to periodically report the topology information of the terminal device and the network device, and/or to report the topology information of the terminal device and the network device in a manner of meeting a preset condition for reporting the topology information of the terminal device and the network device.

Optionally, the anomaly information of the terminal device and the alarm information of the network device are received by the network management entity within preset time.

Optionally, the anomaly information of the terminal device indicates that at least one of the following anomalies occurs on the terminal device: poor service quality, poor network connection quality, a screen display anomaly, freezing, a cell change, a spectrum change, an internet protocol address change, a network type change, or a network anomaly.

Optionally, the transceiver module 610 is specifically configured to send anomaly request information, where the anomaly request information is used to request to report the anomaly information of the terminal device; and after sending the anomaly request information, receive the anomaly information of the terminal device.

Optionally, the anomaly request information is used to indicate to periodically report the anomaly information of the terminal device, and/or to report the anomaly information of the terminal device in a manner of meeting a preset condition for reporting the anomaly information of the terminal device.

Optionally, the anomaly information of the terminal device includes information about the terminal device, service type information, application type information, and/or occurrence time information of the anomaly event, and the anomaly information of the terminal device further includes at least one of the following information: an identifier of the anomaly information of the terminal device, a type of the anomaly event, change time of the anomaly event, clearance time of the anomaly event, or a preset threshold of the anomaly event.

Optionally, the processing module 620 is further configured to determine, based on the topology information of the terminal device and the network device, that the terminal device and the network device are on a same communication link.

Optionally, the transceiver module 610 is further configured to receive intent input information, where the intent input information includes at least one of the following information: a to-be-handled event, an indication for reporting a quantity of handled events, and a time limit for handling the anomaly event, where the anomaly event is the to-be-handled event or the handled event.

Optionally, the transceiver module 610 is further configured to send intent output information, where the intent output information includes at least one of the following information: a change of time for handling the anomaly event, a quantity of handled events, or the handled event.

Optionally, the network device includes an access network device and a core network device, or the access network device.

In another design, the apparatus 600 may be the terminal device in the foregoing embodiments, or may be a component (for example, a chip) of the terminal device. The apparatus 600 may implement steps or procedures performed by the terminal device in the foregoing method embodiments. The transceiver module 610 may be configured to perform receiving and sending related operations of the terminal device in the foregoing method embodiments. The processing module 620 may be configured to perform processing related operations of the terminal device in the foregoing method embodiments.

In a possible implementation, the transceiver module 610 is configured to receive anomaly request information, where the anomaly request information is used to request to report anomaly information of the terminal device; the processing module 620 is configured to generate the anomaly information of the terminal device based on the anomaly request information; and the transceiver module 610 is configured to send the anomaly information of the terminal device.

Optionally, the anomaly information of the terminal device indicates that at least one of the following anomalies occurs on the terminal device: poor service quality, poor network connection quality, a screen display anomaly, freezing, a cell change, a spectrum change, an internet protocol address change, a network type change, or a network anomaly.

Optionally, the anomaly information of the terminal device includes information about the terminal device, service type information, application type information, and/or occurrence time information of the anomaly event, and the anomaly information of the terminal device further includes at least one of the following information: an identifier of the anomaly information of the terminal device, a type of the anomaly event, change time of the anomaly event, clearance time of the anomaly event, or a preset threshold of the anomaly event.

Optionally, the anomaly request information is used to request to report the anomaly information of the terminal device.

Optionally, the anomaly request information is used to indicate to periodically report the anomaly information of the terminal device, and/or to report the anomaly information of the terminal device in a manner of meeting a preset condition for reporting the anomaly information of the terminal device.

It should be understood that a specific process in which the modules perform the foregoing corresponding steps is described in detail in the foregoing method embodiments. For brevity, details are not described herein again.

It should be further understood that the apparatus 600 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 600 may be specifically the network management entity or the terminal device in the foregoing embodiments, and may be configured to perform procedures and/or steps corresponding to the network management entity or the terminal device in the foregoing method embodiments. To avoid repetition, details are not described herein again.

The apparatus 600 in the foregoing solutions has a function of implementing corresponding steps performed by the network management entity or the terminal device in the foregoing methods. The function may be implemented by hardware, or may be implemented by executing corresponding software by hardware. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 610 may alternatively be a transceiver circuit (for example, the transceiver module may include a receiver circuit and a transmitter circuit), and the processing module may be a processing circuit.

It should be noted that the apparatus in FIG. 6 may be the network element or the device in the foregoing embodiments, or may be a chip or a chip system, for example, a system on chip (system on chip, SoC). The transceiver module may be an input/output circuit or a communication interface. The processing module is a processor, a microprocessor, or an integrated circuit integrated on the chip. This is not limited herein.

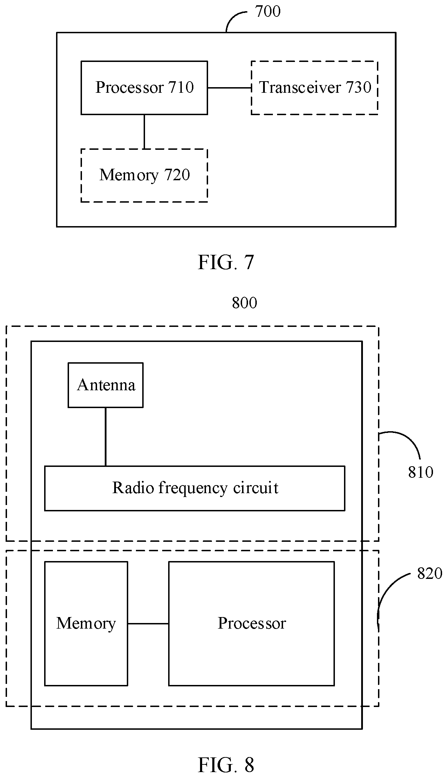

As shown in FIG. 7, an embodiment of this application provides another anomaly event handling apparatus 700. The apparatus 700 includes a processor 710. The processor 710 is configured to execute a computer program or instructions stored in a memory 720, or read data/signaling stored in the memory 720, to perform the methods in the foregoing method embodiments. Optionally, there are one or more processors 710.

Optionally, as shown in FIG. 7, the apparatus 700 further includes the memory 720, and the memory 720 is configured to store the computer program or the instructions and/or the data. The memory 720 and the processor 710 may be integrated or disposed separately. Optionally, there are one or more memories 720.

Optionally, as shown in FIG. 7, the apparatus 700 further includes a transceiver 730, and the transceiver 730 is configured to receive and/or send a signal. For example, the processor 710 is configured to control the transceiver 730 to receive and/or send a signal.

In a solution, the apparatus 700 is configured to implement operations performed by the network management entity in the foregoing method embodiments.

For example, the processor 710 is configured to execute the computer program or the instructions stored in the memory 720, to implement related operations of the network management entity in the foregoing method embodiments, for example, the method performed by the network management entity in any one of the embodiments shown in FIG. 2 to FIG. 5.

In another solution, the apparatus 700 is configured to implement operations performed by the terminal device in the foregoing method embodiments.

For example, the processor 710 is configured to execute the computer program or the instructions stored in the memory 720, to implement related operations of the terminal device in the foregoing method embodiments, for example, the method performed by the terminal device in any one of the embodiments shown in FIG. 2 to FIG. 5.

An embodiment of this application further provides a communication apparatus 800. The communication apparatus 800 may be a network device or a chip. The communication apparatus 800 may be configured to perform operations performed by the network device in the foregoing method embodiments.

When the communication apparatus 800 is the network device, FIG. 8 is a simplified diagram of a structure of the network device. For example, the network device is a base station, and the base station includes a part 810 and a part 820. The part 810 is mainly configured to send and receive a radio frequency signal, and perform conversion between the radio frequency signal and a baseband signal. The part 820 is mainly configured to perform baseband processing, control the base station, and the like. The part 810 may be usually referred to as a transceiver unit, a transceiver machine, a transceiver circuit, a transceiver, or the like. The part 820 is usually a control center of the base station, and may be usually referred to as a processing unit, and is configured to control the base station to perform a processing operation on the network device side in the foregoing method embodiments.

The transceiver unit in the part 810 may also be referred to as a transceiver machine, a transceiver, or the like, and includes an antenna and a radio frequency circuit. The radio frequency circuit is mainly configured to perform radio frequency processing. Optionally, a component configured to implement a receiving function in the part 810 may be considered as a receiving unit, and a component configured to implement a sending function may be considered as a sending unit. In other words, the part 810 includes the receiving unit and the sending unit. The receiving unit may also be referred to as a receiver, a receiver machine, a receiver circuit, or the like. The sending unit may be referred to as a transmitter, a transmitter machine, a transmitter circuit, or the like.

The part 820 may include one or more boards, and each board may include one or more processors and one or more memories. The processor is configured to read and execute a program in the memory to implement a baseband processing function and control the base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the transceiver unit in part 810 is configured to perform receiving and sending related steps performed by the network device in the embodiment shown in FIG. 2. The part 820 is configured to perform processing related steps performed by the network device in the embodiment shown in FIG. 2.

For example, in another implementation, the transceiver unit in the part 810 is configured to perform receiving and sending related steps performed by the access network device in the embodiment shown in FIG. 5. The part 820 is configured to perform processing related steps performed by the access network device in the embodiment shown in FIG. 5.

For example, in still another implementation, the transceiver unit in the part 810 is configured to perform receiving and sending related steps performed by the transmission network device in the embodiment shown in FIG. 5. The part 820 is configured to perform processing related steps performed by the transmission network device in the embodiment shown in FIG. 5.

For example, in yet another implementation, the transceiver unit in the part 810 is configured to perform receiving and sending related steps performed by the core network device in the embodiment shown in FIG. 5. The part 820 is configured to perform processing related steps performed by the core network device in the embodiment shown in FIG. 5.

It should be understood that FIG. 8 is merely an example instead of a limitation. The network device including the transceiver unit and the processing unit may not depend on the structure shown in FIG. 8.

It should be understood that the processor mentioned in this embodiment of this application may be a central processing module (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) may be integrated into the processor.

It should be further noted that the memory described in this specification is intended to include but is not limited to these memories and any memory of another proper type.

An embodiment of this application further provides a computer-readable storage medium. The computer-readable storage medium stores computer instructions used to implement the method performed by the network management entity or the method performed by the terminal device in the foregoing method embodiments.

For example, when a computer program is executed by a computer, the computer is enabled to implement the method performed by the network management entity or the method performed by the terminal device in the foregoing method embodiments.

An embodiment of this application further provides a computer program product, including instructions. When the instructions are executed by a computer, the method performed by the network management entity or the method performed by the terminal device in the foregoing method embodiments is implemented.

An embodiment of this application further provides an anomaly event handling system, including the network management entity and the terminal device in the foregoing method embodiments.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An anomaly event handling method, comprising:
obtaining, by a network management entity, anomaly information of a terminal device, alarm information of a network device, and topology information of the terminal device and the network device;
determining, by the network management entity based on the topology information of the terminal device and the network device, that the anomaly information of the terminal device and the alarm information of the network device are related to a same anomaly event, wherein the anomaly event is that a communication link between the terminal device and the network device is anomalous; and
handling, by the network management entity, the anomaly event.

2. The method according to claim 1, wherein the handling, by the network management entity, the anomaly event comprises:
determining, by the network management entity based on a transmission status, of a data packet that comprises a flag field and that is configured by the network management entity, between the terminal device and the network device, that the anomaly event is that the terminal device and the network device are anomalous or the terminal device is anomalous; and
generating, by the network management entity, one piece of anomaly handling information based on the anomaly event that the terminal device and the network device are anomalous or the terminal device is anomalous, wherein the anomaly handling information is used to handle the anomaly event.

3. The method according to claim 2, wherein the determining, by the network management entity based on a transmission status, of a data packet that comprises a flag field and that is configured by the network management entity, between the terminal device and the network device, that the anomaly event is that the terminal device and the network device are anomalous or the terminal device is anomalous comprises:
sending, by the network management entity, information about the data packet comprising the flag field;
after the network management entity sends the information about the data packet comprising the flag field, receiving, by the network management entity, information about the transmission status that is of the data packet comprising the flag field between the terminal device and the network device and that is detected by the network device; and
determining, by the network management entity based on the anomaly information of the terminal device, the alarm information of the network device, and the information about the transmission status of the data packet comprising the flag field between the terminal device and the network device, that the anomaly event is that the terminal device and the network device are anomalous or the terminal device is anomalous.

4. The method according to any one of claims 1 to 3, wherein the obtaining, by a network management entity, topology information of the terminal device and the network device comprises:
sending, by the network management entity, topology request information, wherein the topology request information is used to request to report the topology information of the terminal device and the network device; and
receiving, by the network management entity, the topology information of the terminal device and the network device after the network management entity sends the topology request information.

5. The method according to claim 4, wherein the topology request information is used to indicate to periodically report the topology information of the terminal device and the network device, and/or to report the topology information of the terminal device and the network device in a manner of meeting a preset condition for reporting the topology information of the terminal device and the network device.

6. The method according to any one of claims 1 to 5, wherein the anomaly information of the terminal device and the alarm information of the network device are received by the network management entity within preset time.

7. The method according to any one of claims 1 to 6, wherein the anomaly information of the terminal device indicates at least one of the following anomalies of the terminal device:
poor service quality, poor network connection quality, a screen display anomaly, freezing, a cell change, a spectrum change, an internet protocol address change, a network type change, or a network anomaly.

8. The method according to any one of claims 1 to 7, wherein the obtaining, by a network management entity, anomaly information of a terminal device comprises:
sending, by the network management entity, anomaly request information, wherein the anomaly request information is used to request to report the anomaly information of the terminal device; and
receiving, by the network management entity, the anomaly information of the terminal device after the network management entity sends the anomaly request information.

9. The method according to claim 8, wherein the anomaly request information is used to indicate to periodically report the anomaly information of the terminal device, and/or to report the anomaly information of the terminal device in a manner of meeting a preset condition for reporting the anomaly information of the terminal device.

10. The method according to any one of claims 1 to 9, wherein the anomaly information of the terminal device comprises information about the terminal device, service type information, application type information, and/or occurrence time information of the anomaly event, and the anomaly information of the terminal device further comprises at least one of the following information:
an identifier of the anomaly information of the terminal device, a type of the anomaly event, change time of the anomaly event, clearance time of the anomaly event, or a preset threshold of the anomaly event.

11. The method according to any one of claims 1 to 10, wherein the method further comprises:
determining, by the network device based on the topology information of the terminal device and the network device, that the terminal device and the network device are on a same communication link.

12. The method according to any one of claims 1 to 11, wherein the method further comprises:
receiving, by the network management entity, intent input information, wherein the intent input information comprises at least one of the following information:
a to-be-handled event, an indication for reporting a quantity of handled events, and a time limit for handling the anomaly event, wherein the anomaly event is the to-be-handled event or the handled event.

13. The method according to claim 12, wherein the method further comprises:
sending, by the network management entity, intent output information, wherein the intent output information comprises at least one of the following information:
a change of time for handling the anomaly event, a quantity of handled events, or the handled event.

14. The method according to any one of claims 1 to 13, wherein the network device comprises an access network device and a core network device, or the access network device.

15. An anomaly event handling apparatus, wherein the apparatus comprises a module configured to perform the method according to any one of claims 1 to 12, or a unit configured to perform the method according to any one of claims 1 to 14.

16. An anomaly event handling apparatus, comprising:
a processor, configured to execute a computer program stored in a memory, so that the apparatus performs the method according to any one of claims 1 to 14.

17. The apparatus according to claim 16, wherein the apparatus further comprises the memory.

18. A computer-readable storage medium, wherein the computer-readable storage medium stores a computer program, and when the computer program is run on a computer, the computer is enabled to perform the method according to any one of claims 1 to 14.

19. A computer program product, wherein the computer program product comprises instructions for performing the method according to any one of claims 1 to 17.
